# FASCICULE DE BREVET EUROPEEN

(11) **EP 2 818 648 B1**
(45) Date de publication et mention de la délivrance du brevet: **16.08.2017**
(21) Numéro de dépôt: 14002019.9
(22) Date de dépôt: 12.06.2014
(51) Int. Cl.: F01D 21/02

(54) **Procédé et dispositif de protection d'un moteur de giravion en survitesse**
Verfahren und Vorrichtung zum Schutz eines Drehflügelflugzeugmotors bei einer Überdrehzahl
Method and device for protecting a rotorcraft engine in overspeed

(30) Priorité: 27.06.2013 FR 1301510
(43) Date de publication de la demande: 31.12.2014
(73) Titulaire: Airbus Helicopters, 13725 Marignane Cedex (FR)
(72) Inventeur: Domingo, Benoît, F-13880 Velaux (FR); Dumur, Guillaume, F-13300 Salon-de-Provence (FR); Bailly, Stéphane, F-13480 Cabries (FR)
(74) Mandataire: GPI & Associés

(56) Documents cités:
- WO-A1-2005/119012
- US-A- 4 619 110
- US-A1- 2012 116 613

## Description

La présente invention est du domaine des procédés et des dispositifs de régulation du fonctionnement des moteurs équipant les giravions. Plus spécifiquement, la présente invention relève des procédés et des dispositifs de protection d'un moteur de giravion provoquant un arrêt du moteur en situation de survitesse.

Les giravions sont des aéronefs à voilure(s) tournante(s) dont au moins la sustentation est procurée par au moins un rotor principal à axe sensiblement vertical. Dans le cadre spécifique d'un hélicoptère, le rotor principal procure non seulement la sustentation du giravion, mais aussi sa propulsion suivant de quelconques directions de progression.

Les giravions sont aussi équipés d'un dispositif anti-couple procurant leur guidage en lacet, tel qu'au moins un rotor annexe à axe sensiblement horizontal. Un tel rotor annexe est par exemple un rotor arrière ou peut être formé d'une hélice propulsive dans le cadre d'un hélicoptère à vitesse élevée de propulsion. D'autres dispositifs anti-couple sont potentiellement utilisés, tels que des dispositifs anti-couple à propulsion d'air par exemple.

L'attitude en vol d'un giravion peut être modifiée par un pilote par variation collective et/ou cyclique du pas des pales composant la voilure tournante du rotor principal. Une variation collective du pas des pales du rotor principal permet de modifier la portance appliquée au giravion et par suite permet son évolution selon la direction verticale. Une variation cyclique du pas des pales du rotor principal permet de modifier la propulsion du giravion suivant les autres directions de progression dans le cas spécifique d'un hélicoptère.

Par ailleurs, une variation du pas collectif d'un rotor annexe ou la mise en oeuvre de tout autre dispositif anti-couple permet de stabiliser la progression du giravion en lacet.

Le ou les rotors d'un giravion sont classiquement entraînés en rotation par un groupe de motorisation comprenant un ou plusieurs moteurs à combustion, turbomoteurs notamment. Le ou les moteurs sont en prise synchrone sur une chaîne cinématique de transmission de puissance mécanique vers le ou les rotors pour procurer leur entraînement en rotation.

En outre, le groupe de motorisation est utilisé pour l'entraînement en rotation de divers organes de puissance du giravion en prise sur la chaîne cinématique de transmission de puissance mécanique. De tels organes de puissance comprennent par exemple un compresseur d'une installation de ventilation, de chauffage et/ou de climatisation ou tout autre organe de puissance devant être entraîné en rotation.

Le ou les moteurs sont communément placés sous dépendance d'une unité de régulation de leur fonctionnement selon l'attitude en vol et l'environnement extérieur du giravion. Une telle unité de régulation est du type de celle couramment désignée par FADEC (d'après l'acronyme anglais Full Authority Digital Engine Control).

Selon la typologie des giravions, la mise en oeuvre de l'unité de régulation est potentiellement directement dépendante des commandes de vol opérées par le pilote, ou encore est placée sous dépendance d'ordres de régulation fournis par une unité de commande équipant le giravion.

Une telle unité de commande est du type de celle couramment désignée par AFCS (d'après l'acronyme anglais Automatic Flight Control System) et transmet des consignes à l'unité de régulation pour gérer l'alimentation en carburant du ou des moteurs selon les besoins du giravion. De telles consignes sont communément relatives à une vitesse de rotation souhaitée d'entraînement en rotation du rotor principal par le ou les moteurs.

Dans ce contexte, il est nécessaire de préserver le ou les moteurs vis-à-vis de leur mise en rotation à une vitesse excessive communément désignée par survitesse.

Plus particulièrement en cas de survitesse, le moteur doit être mis à l'arrêt pour préserver les organes du giravion entraînés par le moteur, et notamment le(s) rotor(s) et les pales de la voilure tournante qu'il(s) comporte(nt). Il est aussi souhaitable d'éviter une détérioration du moteur. A cet effet, il est courant de placer la mise en oeuvre d'un moteur de giravion sous dépendance d'un dispositif de protection de son fonctionnement individuel.

En cas de détection d'une survitesse du moteur, le dispositif de protection provoque sa mise à l'arrêt immédiat. Un tel dispositif de protection est typiquement formé d'un circuit de commande numérique placé sur le ou les chemins logiques de régulation du fonctionnement du ou des moteurs par l'unité de régulation. Cependant, un arrêt brutal du moteur génère une situation d'inconfort pour le pilote qui doit rapidement intervenir sur le comportement du giravion.

Dans le cas d'un giravion monomoteur, un arrêt du moteur nécessite une intervention rapide et délicate du pilote pour mettre le rotor principal en autorotation et ainsi éviter un incident grave.

Dans le cas d'un giravion multi-moteurs, l'entraînement en rotation du rotor principal par au moins un moteur est maintenu en cas de panne d'un autre moteur. Le passage en survitesse de l'ensemble des moteurs équipant un giravion étant peu probable, il est connu un mode d'arrêt croisé des moteurs en cas de survitesse.

En mode d'arrêt croisé, le fonctionnement d'un moteur restant en puissance est maintenu quel que soit son régime de vitesse, sous condition d'application d'un mode de fonctionnement particulier le préservant tel qu'un mode de régulation communément désigné par mode OEI (d'après l'acronyme anglais One Engine Inoperative).

En cas de panne d'un moteur, au moins un autre moteur disponible fonctionnant en mode OEI fournit une puissance de consigne pendant une durée prédéfinie, pour permettre temporairement au giravion de progresser en vol malgré l'indisponibilité de l'un des moteurs.

Pour connaître un environnement technologique proche de la présente invention, on pourra se reporter aux documents FR2967213 (EUROCOPTER FRANCE) et FR2962165 (TURBOMECA) qui décrivent de tels dispositifs de protection d'un moteur en survitesse.

Il apparaît que la mise à l'arrêt immédiat d'un moteur en survitesse peut être inopportune dans certaines phases de vol délicates du giravion. En effet tel que précédemment mentionné, une mise à l'arrêt immédiat d'un moteur place le pilote en situation inconfortable d'avoir à réagir rapidement sur le comportement du giravion avec des ressources en puissance amoindries voire nulles.

Pour cette raison, il a été proposé de restreindre la pleine autorité du dispositif de protection à provoquer l'arrêt du moteur en cas de détection d'une survitesse du moteur. Il a notamment été proposé de conditionner la mise à l'arrêt immédiat d'un moteur en survitesse par le dispositif de protection selon des phases de vol spécifiques du giravion.

Par exemple selon le document EP1753939 (GOODRICH PUMP & ENGINE CONTROL SYSTEMS, INC), il est proposé de prendre en compte l'altitude de progression du giravion pour autoriser une mise à l'arrêt d'un moteur en survitesse par le dispositif de protection. Plus spécifiquement à haute altitude de progression du giravion, le dispositif de protection dispose d'une pleine autorité pour interdire une alimentation en carburant d'un moteur en survitesse. Par contre à basse altitude en situation du giravion proche du sol, une mise à l'arrêt immédiat d'un moteur en survitesse est interdite par inhibition du fonctionnement du dispositif de protection.

Une telle solution est cependant insatisfaisante. En effet, la prise en compte de l'altitude de progression du giravion pour autoriser ou non un arrêt immédiat d'un moteur en survitesse n'est pas adaptée vis-à-vis d'un maintien du giravion sous conditions de vol au mieux sécurisé. A haute altitude, il peut être inopportun d'autoriser un arrêt immédiat d'un moteur en survitesse vis-à-vis de l'état de vol global du giravion. A basse altitude, un arrêt du moteur en survitesse est interdit quelle que soit l'état de vol du giravion, au risque de placer le giravion en situation de danger.

Il a aussi été proposé par le document US 4 619 110 (MORE M.S.) de restreindre la pleine autorité du dispositif de protection à provoquer l'arrêt du moteur à partir de l'activation par le pilote d'un bouton de commande implanté sur un organe de commande de vol.

Une telle solution est cependant insatisfaisante dans la mesure où le pilote, confronté à une situation d'urgence et étant sous tension nerveuse, aura tendance à profiter systématiquement de l'opportunité qui lui est offerte de restreindre la pleine autorité du dispositif de protection afin de disposer des capacités optimales du moteur.

Il apparaît donc utile de trouver raisonnablement des critères adaptés pour procurer un compromis satisfaisant entre l'opportunité de provoquer l'arrêt immédiat d'un moteur en survitesse et maintenir le moteur en fonctionnement tant que possible pour favoriser au mieux les conditions de vol sécurisé du giravion et le confort de pilotage, cela au moyen d'une solution fiable et aisée à mettre en oeuvre.

Sur la base du constat et des besoins qui viennent d'être faits, le but de la présente invention est de proposer un procédé et un dispositif de mise à l'arrêt d'un moteur de giravion en survitesse, en recherchant des modalités d'autorisation ou d'interdiction d'une telle mise à l'arrêt répondant au mieux au compromis recherché. Il est par ailleurs souhaitable que de tels procédé et dispositifs soient applicables tant pour un giravion monomoteur que pour un giravion multi-moteur et soient applicables quelle que soit l'organisation structurelle du giravion.

Le procédé de la présente invention est un procédé de mise à l'arrêt d'un moteur en survitesse équipant un giravion. Le giravion est doté d'au moins un dit moteur d'entraînement d'organes de puissance du giravion. Les dits organes de puissance comprennent au moins un rotor équipant le giravion, ledit rotor au moins comprenant au moins un rotor principal à axe sensiblement vertical..

Le procédé de la présente invention comprend une opération de détection d'une survitesse dudit moteur et une opération de détection d'au moins une phase de vol spécifique du giravion. Ladite phase de vol conditionne la mise en oeuvre d'un dispositif de protection provoquant une mise à l'arrêt du moteur en cas de détection d'une survitesse du moteur.

Selon la présente invention, un tel procédé est principalement reconnaissable en ce que ladite phase de vol spécifique est identifiée par une puissance mécanique requise par le giravion devant être fournie par ledit au moins un moteur. Un arrêt du moteur en survitesse par le dispositif de protection est placé sous dépendance d'une opération de comparaison entre ladite puissance mécanique requise et un seuil de puissance prédéfini. L'arrêt du moteur en survitesse est commandé par le dispositif de protection sous condition que ladite puissance mécanique requise est identifiée inférieure ou égale au seuil de puissance prédéfini. Le procédé de la présente invention comprend plus particulièrement les opérations suivantes :
- ) selon l'état de vol courant du giravion, déduire par calcul la puissance mécanique requise par le giravion. La puissance mécanique requise est notamment calculée par identification d'au moins un couple résistant généré par l'un au moins des dits organes de puissance dont au moins ledit au moins un rotor principal, voire encore subsidiairement par un dispositif anti-couple équipant le giravion tel qu'un rotor annexe à axe sensiblement horizontal et/ou tout autre organe de puissance mécanique entraîné par le moteur. Puis,
- ) comparer la puissance mécanique requise préalablement déduite avec ledit seuil de puissance. A l'issue de cette opération de comparaison, générer une consigne identifiant la puissance mécanique requise par rapport audit seuil de puissance.
- ) détecter par ailleurs la vitesse de rotation du moteur.En cas de survitesse du moteur, conditionner un arrêt du moteur par le dispositif de protection selon la consigne préalablement générée.

La prise en compte de la puissance mécanique requise pour interdire un arrêt du fonctionnement du moteur en survitesse procure à un pilote humain du giravion un confort de pilotage.

En effet, le pilote humain dispose en cas d'une détection de survitesse du moteur d'un temps de réaction utile favorisant une prise de décision sereine par le pilote humain pour modifier l'attitude en vol du giravion préalablement à un arrêt effectif du moteur en survitesse.

Un tel confort de pilotage procuré par l'invention peut être obtenu au moyen d'un dispositif de protection de structure simple et cela quelles que soit les conditions de l'environnement extérieur du giravion et quel que soit l'agencement structurel du giravion. En effet, la sécurisation de la progression du giravion en cas de survitesse du moteur est obtenue à partir d'informations en nombre limité communément fournies par l'instrumentation de bord du giravion permettant de déduire la puissance mécanique requise.

Le confort de pilotage procuré par l'invention est obtenu indépendamment et sans astreinte d'une prise en compte de diverses modalités d'évolution du giravion. D'éventuels conflits entre divers critères devant être individuellement ou collectivement pris en compte pour identifier lesdites diverses modalités d'évolution du giravion sont évités.

Il est aussi à relever que les conditions de vol sécurisé du giravion en cas de survitesse du moteur peuvent être optimisées par la prise en compte préférée d'une anticipation de la puissance mécanique requise par le giravion déduite selon l'état de vol courant du giravion. Une telle anticipation de puissance est notamment déduite à partir des informations communément fournies par l'instrumentation de bord du giravion, tel qu'à partir de commandes de vol courantes générées par un pilote du giravion pour faire varier le pas des pales dudit au moins un rotor.

L'état de vol courant du giravion est typiquement identifié par une instrumentation de bord du giravion pour définir ladite puissance mécanique requise. Selon l'état de vol courant du giravion, l'instrumentation de bord fournit des informations à partir desquelles la puissance mécanique requise par le giravion peut être déduite par calcul, notamment à partir d'une ou de plusieurs informations relatives au(x) couple(s) résistant(s) généré(s) par l'un au moins des organes de puissance entraînés par le moteur.

Pour déduire ladite puissance mécanique requise, il est plus particulièrement pris en compte au moins le(s) couple(s) résistant(s) généré(s) par le ou les rotors équipant le giravion et plus spécifiquement par le rotor principal procurant au moins la fonction essentielle de sustentation du giravion.

Dans le cas courant où le giravion est équipé d'un dispositif anti-couple, ladite puissance mécanique requise est déduite en prenant potentiellement en compte le couple résistant généré par le dispositif anti-couple mettant en oeuvre un organe de puissance en prise sur le moteur. Il est notamment pris en compte le couple résistant d'un rotor annexe à axe sensiblement horizontal équipant le giravion, voire encore par exemple le couple résistant d'un compresseur d'air exploité par un dispositif anti-couple à propulsion d'air.

Ledit seuil de puissance est notamment déterminé selon la structure du giravion et plus particulièrement selon ses capacités de motorisation et selon sa masse, voire encore selon ses facultés de résistance aux efforts notamment en ce qui concerne le rotor principal. Le seuil de puissance correspond, pour un giravion de structure donnée, à une puissance mécanique considérée critique vis-à-vis de conditions de vol sécurisé du giravion en cas d'arrêt du moteur au regard de l'état de vol courant du giravion évalué par l'instrumentation de bord.

Il est à considérer que le seuil de puissance est potentiellement un seuil prédéfini de valeur prédéterminée ou est potentiellement un seuil de puissance courant à valeur variable calculée selon l'état de vol courant du giravion, en prenant notamment en compte la dynamique connue du moteur et non seulement des critères à valeurs préétablies selon la structure du giravion mais aussi des critères à valeur variable dont la valeur courante est identifiée par l'instrumentation de bord du giravion.

De tels critères à valeurs variables sont préétablis en étant par exemple relatifs aux conditions de l'environnement extérieur du giravion, à la mise en fonctionnement ou non de l'un au moins desdits organes de puissance, tel qu'une installation de ventilation, de chauffage et/ou de climatisation ou encore tel qu'une machine électrique réversible en prise sur la chaîne de transmission mécanique entre le moteur et le ou les rotors, et/ou en étant par exemple encore relatifs à la masse courante du giravion. Les critères à valeurs variables peuvent également être relatifs aux conditions d'opération du giravion, telle qu'une opération en situation de combat. La masse courante du giravion peut non seulement prendre en compte la masse intrinsèque du giravion, mais aussi la masse de carburant embarqué et/ou la masse d'éventuels emports.

Tel que précédemment mentionné, la puissance mécanique requise est potentiellement déduite d'une valeur courante dudit au moins un couple résistant.

Toutefois, la puissance mécanique requise est préférentiellement déduite d'une valeur anticipée dudit au moins un couple résistant. Une telle valeur anticipée est notamment calculée à partir de données d'état de vol du giravion fournies par une instrumentation de bord du giravion et relatives à l'évolution de l'attitude du giravion, selon au moins des commandes de vol opérées par un pilote du giravion, indifféremment pilote humain ou pilote automatique.

Dans ce cas et plus particulièrement, lesdites données d'état de vol sont au moins relatives à des commandes de vol générées par un pilote du giravion modifiant le pas des pales dudit au moins un rotor. Il est compris que lesdites commandes de vol sont potentiellement générées par des organes de commande manuelle manoeuvrés par un pilote humain et/ou sont potentiellement générées par un pilote automatique équipant le giravion.

Le calcul par anticipation de la puissance mécanique requise prend au moins en compte une commande de variation du pas des pales du rotor principal, voire aussi une variation du pas des pales d'au moins un rotor annexe, pour fournir les données d'état de vol du giravion permettant d'anticiper la puissance mécanique requise. On pourra à ce propos se référer par exemple au document US 2008/0283671 (SIKORSKY AIRCRAFT CORP.).

Selon une forme de réalisation, dans le cas où la puissance mécanique requise est identifiée par ladite consigne supérieure ou égale audit seuil de puissance, un arrêt du moteur en survitesse commandé par les moyens de détection est interdit par le dispositif de protection.

Par exemple, une génération de la consigne provoque une rupture de la continuité d'un chemin logique de transmission vers des moyens de régulation du moteur, d'un ordre d'arrêt du moteur généré par des moyens de détection identifiant une situation du moteur en survitesse.

Une génération de la consigne provoque par exemple une manoeuvre d'un commutateur placé sur ledit chemin logique. Ladite manoeuvre du commutateur interdit une transmission à travers le chemin logique dudit ordre d'arrêt du moteur généré par les moyens de détection identifiant une situation du moteur en survitesse.

Selon une autre forme de réalisation, dans le cas où la puissance mécanique requise est identifiée par ladite consigne inférieure ou égale audit seuil de puissance, un arrêt du moteur en survitesse commandé par les moyens de détection est autorisé par le dispositif de protection.

Par exemple, la consigne et un ordre d'arrêt du moteur généré par des moyens de détection identifiant une situation du moteur en survitesse, sont conjointement traités par calcul pour générer une commande d'arrêt du moteur vers des moyens de régulation du moteur.

Lesdits moyens de régulation sont potentiellement formés de moyens d'alimentation en énergie électrique du moteur et/ou encore sont potentiellement formés de moyens de dosage de l'alimentation en carburant du moteur. Il est aussi compris que les moyens mis en oeuvre par le procédé de la présente invention sont potentiellement intégrés au moins en partie dans une unité de régulation du fonctionnement du moteur, telle que du type FADEC.

La présente invention a aussi pour objet un dispositif de protection d'un moteur apte à provoquer un arrêt du moteur en cas de détection d'une survitesse du moteur conformément à la mise en oeuvre d'un procédé tel qu'il vient d'être décrit.

Plus particulièrement, ledit dispositif de protection est du type comprenant des moyens de détection de la vitesse de rotation du moteur et des moyens générateurs d'un ordre d'arrêt du moteur en cas d'une identification par les moyens de détection d'une situation du moteur en survitesse. Le fonctionnement du dispositif de protection est placé sous la dépendance de moyens de détermination d'une phase de vol spécifique du giravion conditionnant une mise à l'arrêt du moteur par le dispositif de protection en cas d'une dite identification du moteur en survitesse.

Selon la présente invention, un tel dispositif de protection est équipé :
- ) de moyens de calcul comprenant au moins un premier calculateur et un deuxième calculateur. Le premier calculateur comprend des moyens de déduction par calcul de la puissance mécanique requise par le giravion et est en relation avec le deuxième calculateur. Le deuxième calculateur comprend des moyens de comparaison par calcul entre la puissance mécanique requise transmise par le premier calculateur et le seuil de puissance. Le deuxième calculateur comprend en outre des moyens générateurs de la consigne.
- ) de moyens générateurs d'une commande d'arrêt du moteur par le dispositif de protection dont la mise en oeuvre est placée sous la dépendance des moyens de détection et des moyens de calcul.

Selon une forme de réalisation, le premier calculateur est un outil de calcul de la puissance mécanique requise en fonction d'une donnée d'état de vol du giravion notamment fournie par une instrumentation de bord du giravion et relative à au moins un couple résistant généré par l'un au moins des dits organes de puissance et plus particulièrement par l'un au moins des rotors, dont au moins ledit au moins un rotor principal.

Il est cependant préféré d'optimiser les conditions de vol sécurisé du giravion en cas de survitesse du moteur en prenant en compte une anticipation de la puissance mécanique requise.

A cet effet, le premier calculateur est de préférence un outil de calcul de la puissance mécanique requise prenant en compte une anticipation de la puissance mécanique requise en fonction de données d'état de vol anticipé du giravion identifiées selon au moins des commandes de vol générées par un pilote du giravion, indifféremment pilote humain ou pilote automatique. Les dites commandes de vol provoquent une variation du pas de l'un au moins des rotors, rotor principal notamment, voire encore provoque la mise en oeuvre d'un dispositif anti-couple, rotor(s) annexe(s) notamment.

Les données d'état de vol anticipé du giravion peuvent subsidiairement être en outre identifiées en prenant en compte des commandes de mise en oeuvre d'un équipement de bord du giravion entraîné par le moteur, tel que par exemple une installation de ventilation, de chauffage et/ou de climatisation et/ou une machine électrique équipant le giravion.

Le premier calculateur est potentiellement en relation directe avec l'instrumentation de bord du giravion et notamment avec des organes du giravion générateurs desdites commandes de vol. Le premier calculateur peut aussi être en relation avec ou être intégré à une interface de calcul de ladite valeur anticipée du couple résistant généré par ledit au moins un rotor.

Une telle interface de calcul est notamment avantageusement comprise dans une unité de commande équipant le giravion telle que du type AFCS (d'après l'acronyme anglais Automatic Flight Control System) ou unité de commande analogue. Dans ce cas, l'interface de calcul est en relation avec l'instrumentation de bord du giravion pour générer des ordres de mise en oeuvre de l'unité de régulation du fonctionnement du moteur.

Selon une forme de réalisation, les moyens générateurs de la commande d'arrêt comprennent des moyens d'interdiction d'une transmission d'un ordre d'arrêt du moteur généré par les moyens de détection. Dans ce cas, la mise en oeuvre de tels moyens d'interdiction est placée sous la dépendance des moyens de calcul.

Lesdits moyens d'interdiction sont par exemple placés sur un chemin logique de transmission de l'ordre d'arrêt du moteur généré par les moyens de détection. Dans ce cas, les moyens générateurs de la commande d'arrêt intègrent potentiellement les moyens de détection, la commande d'arrêt étant issue de l'ordre d'arrêt généré par les moyens de détection.

Les moyens d'interdiction comprennent par exemple un commutateur à relais dont la manoeuvre est placée sous dépendance d'une génération de la consigne par les moyens de calcul.

Il est compris que selon l'architecture dudit chemin logique et l'organisation des moyens de régulation du fonctionnement du moteur, ledit commutateur à relais est potentiellement un commutateur normalement ouvert ou un commutateur normalement fermé.

Selon une autre forme de réalisation, les moyens générateurs d'une commande d'arrêt du moteur comprennent un troisième calculateur de traitement par calcul conjointement de la consigne et de l'ordre d'arrêt du moteur généré par les moyens de détection.

La présente invention a aussi pour objet un giravion équipé d'un dispositif de protection tel qu'il vient d'être décrit. Le giravion est potentiellement un giravion monomoteur ou un giravion multi-moteur. Dans le cas d'un giravion multi-moteur, chacun des moteurs est équipé d'un dispositif de protection propre pouvant être mis en oeuvre selon un dit mode d'arrêt croisé des moteurs en cas de survitesse.

Des exemples de réalisation de la présente invention vont être décrits en relation avec les figures de la planche annexée, dans laquelle :
- la fig.1 est une illustration schématique d'un giravion équipé d'un dispositif de la présente invention procurant une mise à l'arrêt d'un moteur du giravion en situation de survitesse.
- la fig.2 est une illustration schématique d'un premier exemple de réalisation du dispositif représenté sur la fig.1.
- la fig.3 est une illustration schématique d'un deuxième exemple de réalisation du dispositif représenté sur la fig.1.

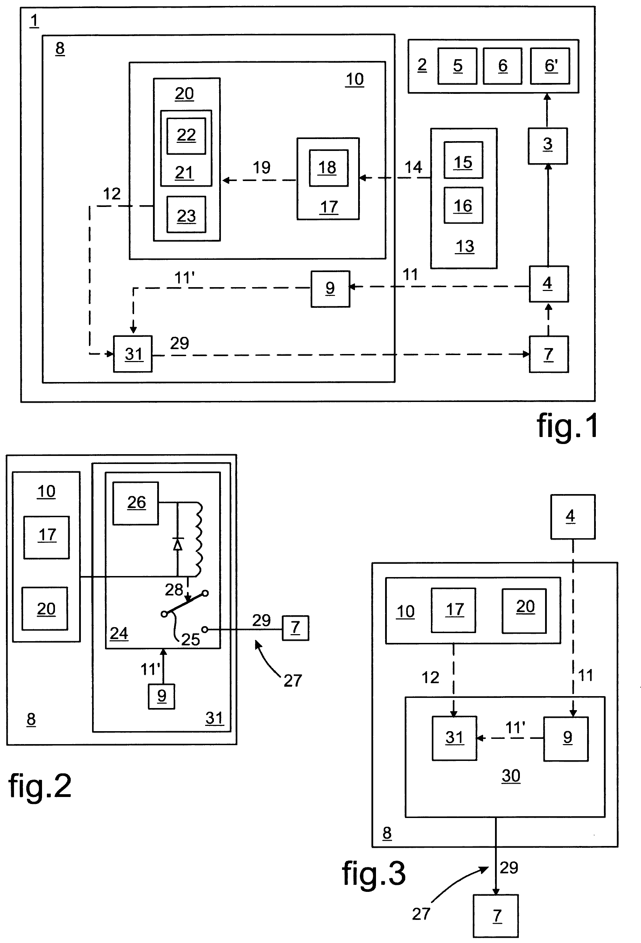

Sur la fig.1, un giravion 1 est équipé d'organes de puissance mécanique 2 entraînés en rotation par l'intermédiaire d'une boîte de transmission 3 de puissance mécanique. La boîte de transmission 3 de puissance mécanique est elle-même en prise tournante sur un arbre d'entraînement mû en rotation par au moins un moteur 4 équipant le giravion 1. Les organes de puissance mécanique 2 comprennent notamment au moins un rotor principal 5 à axe sensiblement vertical, voire aussi un dispositif anti-couple tel que formé par au moins un rotor annexe 6 à axe sensiblement horizontal et/ou un équipement de bord 6' du giravion 1, tel qu'une installation de ventilation, de chauffage et/ou de climatisation et/ou tel qu'une machine électrique.

Il est utile de protéger les organes du giravion 1 entraînés par le moteur 4 en situation de survitesse, en favorisant cependant une progression temporaire du giravion 1 en vol sécurisé vers une zone de posé, y compris par mise en autorotation du rotor principal 5. A cet effet, une mise à l'arrêt du moteur 4 en survitesse est provoquée sous dépendance d'une prise en compte des besoins en puissance mécanique du giravion, et essentiellement des besoins en puissance mécanique courants ou anticipés au moins du rotor principal 5.

Plus particulièrement, la mise en oeuvre de moyens de régulation 7 du fonctionnement du moteur 4 est placée sous la dépendance d'un dispositif de protection 8 du moteur 4 provoquant sa mise à l'arrêt en cas de survitesse. Le dispositif de protection est générateur d'une commande d'arrêt 29 du moteur 4 en survitesse, sous condition que la puissance mécanique requise 19 par le giravion 1 est suffisante pour permettre au pilote de modifier sous conditions de vol sécurisé l'attitude du giravion préalablement à l'arrêt effectif du moteur 4.

Dans ce contexte, le dispositif de protection 8 comporte des moyens générateurs 31 de la commande d'arrêt 29, dont la mise en oeuvre est placée sous la dépendance de moyens de détection 9 de la vitesse de rotation du moteur 4 et de moyens de calcul 10 de la puissance mécanique courante ou anticipée requise par le giravion 1 en fonction de son état de vol.

A partir d'une donnée de vitesse 11 relative à la vitesse de rotation du moteur 4, les moyens de détection 9 sont aptes à générer un ordre d'arrêt 11' du moteur. Par ailleurs, une consigne 12 relative aux besoins en puissance du giravion 1 est générée par les moyens de calcul 10 pour sélectivement interdire ou provoquer l'arrêt du moteur en situation de survitesse.

La consigne 12 est générée en exploitant diverses données d'état de vol 14 du giravion 1 fournies par une instrumentation de bord 13 équipant le giravion 1. De telles données d'état de vol 14 peuvent être exploitées pour déterminer les besoins en puissance mécanique courants ou anticipés du giravion 1, notamment selon le couple résistant 15 courant du rotor principal 5 et/ou selon les commandes de vol 16 générées par un pilote du giravion 1. Subsidiairement, les besoins en puissance du giravion 1 peuvent prendre en compte les besoins en puissance spécifiques d'un ou de plusieurs équipements de bord 6' du giravion 1.

A cet effet, les moyens de calcul 10 comportent un premier calculateur 17 comprenant des moyens de déduction 18 par calcul de la puissance mécanique requise 19 par le giravion 1 à partir de données d'état de vol 14 fournies par l'instrumentation de bord 13 du giravion 1. Les données d'état de vol 17 sont par exemple relatives au moins couple résistant 15 généré par le rotor principal 5, le premier calculateur 14 déduisant dans ce cas une puissance mécanique requise 19 courante du giravion 1. De préférence, les données d'état de vol 17 sont par exemple encore relatives au moins aux commandes de vol 16 générées par le pilote du giravion, le premier calculateur 14 déduisant dans ce cas une puissance mécanique requise 19 anticipée du giravion 1.

Le premier calculateur 17 est en relation avec un deuxième calculateur 20 comprenant des moyens de comparaison 21 par calcul entre la puissance mécanique requise 19 déduite par le premier calculateur 17 et un seuil de puissance 22 prédéfini relatif à une puissance mécanique considérée critique vis-à-vis de conditions de vol sécurisé du giravion 1.

Le deuxième calculateur 20 comprend des moyens générateurs 23 de la consigne 12 à l'issue d'une comparaison entre la puissance mécanique requise 19 par le giravion 1 et ledit seuil de puissance 22. Une telle opération de comparaison permet d'identifier si la puissance mécanique requise 19 est inférieure ou supérieure au seuil de puissance 22.

Le seuil de puissance 22 est un seuil prédéfini dont la valeur est potentiellement préétablie ou dont une valeur courante est calculée par le deuxième calculateur 20 selon des critères de calcul à valeur variable préétablis. Des valeurs courantes desdits critères de calcul à valeur variable sont notamment fournies par l'instrumentation de bord 13 du giravion selon l'état de vol courant du giravion 1 et/ou selon les conditions de l'environnement extérieur.

Selon l'architecture du dispositif de protection 8, la consigne 12 est générée dans le cas où la puissance mécanique requise 19 par le giravion 1 est supérieure ou égale audit seuil de puissance 22 pour interdire un arrêt du moteur 4 en situation de survitesse, ou inversement dans le cas où la puissance mécanique requise 19 par le giravion 1 est inférieure ou égale audit seuil de puissance 22 pour provoquer un arrêt du moteur 4 en situation de survitesse.

Une situation de survitesse du moteur 4 étant identifiée par les moyens de détection 9, un arrêt du moteur 4 est provoqué par le dispositif de protection 8 sous dépendance de la consigne 12. Quelles que soit les modalités de génération de la consigne 12 par le deuxième calculateur 20, un arrêt du moteur 4 en situation de survitesse est interdit dans le cas où la puissance mécanique requise 19 par le giravion 1 est supérieure ou égale audit seuil de puissance 22, pour offrir au pilote le temps nécessaire d'opérer confortablement un changement d'attitude du giravion 1.

Sur les fig.2 et fig.3, un dispositif de protection 8 est conforme au dispositif de protection 8 illustré sur la fig.1. Le dispositif de protection 8 comprend notamment les moyens de détection 9 d'une situation du moteur en survitesse, les moyens de calcul 10 associant ledit premier calculateur 17 et le deuxième calculateur 20, et les moyens générateurs 31 de la commande d'arrêt 29 vers les moyens de régulation 7.

Sur l'exemple de réalisation représenté sur la fig.2, les moyens générateurs 31 de la commande d'arrêt 29 intègrent les moyens de détection 9, la commande d'arrêt 29 générée par le dispositif de protection 8 étant directement issue de l'ordre d'arrêt 11'. Les moyens générateurs 31 de la commande d'arrêt 29 comprennent des moyens d'interdiction 24 de la transmission de l'ordre d'arrêt 11' vers les moyens de régulation 7 du fonctionnement du moteur 4.

Les moyens d'interdiction 24 comprennent un commutateur 25 à relais 26 interposé sur un chemin logique 27 de transmission d'informations entre le dispositif de protection 8 et les moyens de régulation 7. Dans le cas où la consigne 12 identifie une puissance mécanique requise 19 supérieure ou égale audit seuil de puissance 22, les moyens d'interdiction 24 sont activés par la consigne 12 pour interdire la transmission de l'ordre d'arrêt 11' à travers le chemin logique 27 vers les moyens de régulation 7 du moteur 4.

Plus particulièrement, une manoeuvre 28 du commutateur 25 est placée sous la dépendance d'une activation du relais 26 par la consigne 12, pour provoquer une rupture de la continuité matérielle du chemin logique 27 et interdire une transmission par le dispositif de protection 8 d'une commande d'arrêt 29 issue de l'ordre d'arrêt 11' vers les moyens de régulation 7 du moteur 4. Inversement, une transmission par le dispositif de protection 8 vers les moyens de régulation 7 d'une commande d'arrêt 29 issue de l'ordre d'arrêt 11' est autorisée sous condition que la puissance mécanique requise par le giravion est identifiée par le deuxième calculateur 20 inférieure ou égale au seuil de puissance prédéfini.

Sur l'exemple de réalisation représenté sur la fig.3, les moyens générateurs 31 de la commande d'arrêt 29 et les moyens de détection 9 sont rassemblés dans un troisième calculateur 30. Le troisième calculateur 30 constitue un outil de traitement par calcul conjointement de la consigne 12 et de ladite donnée de vitesse 11 relative à la vitesse de rotation du moteur et traitée par les moyens de détection 9 générant un ordre d'arrêt 11' en cas de détection du moteur en situation de survitesse. La commande d'arrêt 29 est générée par le troisième calculateur 30 en cas de génération simultanée de l'ordre d'arrêt 11' et de la consigne 12 identifiant une puissance mécanique requise inférieure ou égale au seuil de puissance prédéfini.

## Revendications

1. Procédé de mise à l'arrêt d'un moteur (4) en survitesse équipant un giravion (1), le giravion (1) étant doté d'au moins un dit moteur (4) d'entraînement d'organes de puissance (2) du giravion (1) dont au moins un rotor (5,6) comprenant au moins un rotor principal (5) à axe sensiblement vertical, le procédé comprenant une opération de détection d'une survitesse dudit moteur (4) et une opération de détection d'au moins une phase de vol spécifique du giravion (1) conditionnant la mise en oeuvre d'un dispositif de protection (8) provoquant une mise à l'arrêt du moteur (4) en cas de détection d'une survitesse du moteur (4), ladite phase de vol spécifique étant identifiée par une puissance mécanique requise (19) par le giravion (1) devant être fournie par ledit au moins un moteur (4), un arrêt du moteur (4) en survitesse par le dispositif de protection (8) étant placé sous dépendance d'une opération de comparaison entre ladite puissance mécanique requise (19) et un seuil de puissance (22) prédéfini, l'arrêt du moteur (4) en survitesse étant commandé par le dispositif de protection (8) sous condition que ladite puissance mécanique requise (19) est identifiée inférieure ou égale au seuil de puissance (22) prédéfini,
**caractérisé en ce que** le procédé comprend les opérations suivantes :
- ) selon l'état de vol courant du giravion (1), déduire par calcul la puissance mécanique requise (19) par le giravion (1) par identification d'au moins un couple résistant (15) généré par l'un au moins des dits organes de puissance (2) dont au moins ledit au moins un rotor principal (5),
- ) comparer la puissance mécanique requise (19) préalablement déduite avec ledit seuil de puissance (22) et générer une consigne (12) identifiant la puissance mécanique requise (19) par rapport audit seuil de puissance (22),
- ) détecter la vitesse de rotation du moteur (4) et en cas de survitesse du moteur (4) conditionner un arrêt du moteur (4) par le dispositif de protection (8) selon la consigne (12) préalablement générée.

2. Procédé selon la revendication 1,
**caractérisé en ce que** la puissance mécanique requise (19) est déduite d'une valeur courante dudit au moins un couple résistant (15).

3. Procédé selon revendication 1,
**caractérisé en ce que** la puissance mécanique requise (19) est déduite d'une valeur anticipée dudit au moins un couple résistant (15) calculée à partir de commandes de vol (16) générées par un pilote du giravion (1) modifiant le pas des pales dudit au moins un rotor (5,6).

4. Procédé selon l'une quelconque des revendications 1 à 3,
**caractérisé en ce que** la puissance mécanique requise (19) étant identifiée par ladite consigne (12) supérieure ou égale audit seuil de puissance (22), interdire par le dispositif de protection (8) un arrêt du moteur (4) en survitesse commandé par les moyens de détection (9).

5. Procédé selon la revendication 4,
**caractérisé en ce qu'**une génération de la consigne (12) provoque une rupture de la continuité d'un chemin logique (27) de transmission vers des moyens de régulation (7) du moteur (4), d'un ordre d'arrêt (11') du moteur (4) généré par des moyens de détection (9) identifiant une situation du moteur (4) en survitesse.

6. Procédé selon la revendication 5,
**caractérisé en ce qu'**une génération de la consigne (12) provoque une manoeuvre (28) d'un commutateur (25) placé sur ledit chemin logique (27), ladite manoeuvre (28) du commutateur (25) interdisant la transmission à travers le chemin logique (27) dudit ordre d'arrêt (11') du moteur (4).

7. Procédé selon l'une quelconque des revendications 1 à 3,
**caractérisé en ce que** la puissance mécanique requise (19) étant identifiée par ladite consigne (12) inférieure ou égale audit seuil de puissance (22), autoriser par le dispositif de protection (8) un arrêt du moteur (4) en survitesse commandé par les moyens de détection (9).

8. Procédé selon la revendication 7,
**caractérisé en ce que** la consigne (12) et un ordre d'arrêt (11') du moteur (4) généré par des moyens de détection (9) identifiant une situation du moteur (4) en survitesse, sont conjointement traités par calcul pour générer une commande d'arrêt (29) du moteur (4) vers des moyens de régulation (7) du moteur (4).

9. Dispositif de protection (8) apte à la mise en oeuvre d'un procédé selon l'une quelconque des revendications 1 à 8, ledit dispositif de protection (8) comprenant des moyens de détection (9) de la vitesse de rotation du moteur (4) et des moyens générateurs d'un ordre d'arrêt (11') du moteur (4) en cas d'une identification par les moyens de détection (9) d'une situation du moteur en survitesse, le fonctionnement du dispositif de protection (8) étant placé sous la dépendance de moyens de détermination d'une phase de vol spécifique du giravion (1) conditionnant une mise à l'arrêt du moteur (4) par le dispositif de protection (8) en cas d'une dite identification du moteur (4) en survitesse,
**caractérisé en ce que** le dispositif de protection (8) est équipé :
- ) de moyens de calcul (10) comprenant au moins un premier calculateur (17) et un deuxième calculateur (20), le premier calculateur (17) comprenant des moyens de déduction (18) par calcul de la puissance mécanique requise (19) par le giravion (1) et étant en relation avec le deuxième calculateur (20), le deuxième calculateur (20) comprenant des moyens de comparaison (21) par calcul entre la puissance mécanique requise (19) transmise par le premier calculateur (17) et le seuil de puissance (22), le deuxième calculateur (20) comprenant des moyens générateurs (23) de la consigne (12),
- ) de moyens générateurs (31) d'une commande d'arrêt (29) du moteur (4) par le dispositif de protection (8) dont la mise en oeuvre est placée sous la dépendance desdits moyens de détection (9) et desdits moyens de calcul (10).

10. Dispositif de protection selon la revendication 9,
**caractérisé en ce que** le premier calculateur (17) est un outil de calcul de la puissance mécanique requise (19) en fonction d'une donnée d'état de vol (17) du giravion fournie par une instrumentation de bord (13) du giravion et relative au moins au couple résistant (15) généré au moins par ledit au moins un rotor principal (5).

11. Dispositif de protection selon l'une quelconque des revendications 9 et 10,
**caractérisé en ce que** le premier calculateur (17) est un outil de calcul de la puissance mécanique requise (19) prenant en compte une anticipation de la puissance mécanique requise (19) en fonction de données d'état de vol (17) anticipé du giravion relatives au moins à des commandes de vol (16) générées par un pilote du giravion.

12. Dispositif de protection selon l'une quelconque des revendications 9 à 11,
**caractérisé en ce que** les moyens générateurs (31) de la commande d'arrêt (29) comprennent des moyens d'interdiction (24) d'une transmission d'un ordre d'arrêt (11') du moteur (4) généré par les moyens de détection (9), la mise en oeuvre des moyens d'interdiction (24) étant placée sous la dépendance des moyens de calcul (10).

13. Dispositif de protection selon la revendication 12,
**caractérisé en ce que** les moyens d'interdiction (24) sont placés sur un chemin logique (27) de transmission de l'ordre d'arrêt (11') du moteur (4) généré par les moyens de détection (9).

14. Dispositif de protection selon la revendication 13,
**caractérisé en ce que** les moyens d'interdiction (24) comprennent un commutateur (25) à relais (26) dont la manoeuvre (28) est placée sous la dépendance d'une génération de la consigne (12) par les moyens de calcul (10).

15. Dispositif de protection selon l'une quelconque des revendications 9 à 11,
**caractérisé en ce que** les moyens générateurs (31) d'une commande d'arrêt (29) du moteur (4) comprennent un troisième calculateur (30) de traitement par calcul conjointement de la consigne (12) et d'un ordre d'arrêt (11') du moteur (4) généré par les moyens de détection (9).

16. Giravion (1) équipé d'un dispositif de protection (8) selon l'une quelconque des revendications 9 à 15.

## Patentansprüche

1. Verfahren zum Abschalten eines Motors (4) bei einer Überdrehzahl, mit dem ein Drehflügelflugzeug (1) ausgerüstet ist, wobei das Drehflügelflugzeug (1) mit mindestens einem solchen Motor (4) zum Antrieb von Leistungsbauteilen (2) des Drehflügelflugzeugs (1) versehen ist, von denen mindestens eins ein Rotor (5, 6) ist, der mindestens einen Hauptrotor (5) mit im Wesentlichen vertikaler Achse ist, wobei das Verfahren einen Schritt der Erfassung einer Überdrehzahl des Motors (4) und einen Schritt der Erfassung mindestens einer spezifischen Flugphase des Drehflügelflugzeugs (1) umfasst, die das Eingreifen einer Schutzvorrichtung (8) bedingt, die ein Abschalten des Motors (4) im Falle der Erfassung einer Überdrehzahl des Motors (4) bewirkt, wobei die spezifische Flugphase durch eine von dem Drehflügelflugzeug (1) geforderte mechanische Leistung identifiziert wird, bevor diese durch den mindestens einen Motor (4) geliefert wird, wobei ein Abschalten des Motors (4) bei einer Überdrehzahl durch die Schutzvorrichtung (8) abhängig gemacht wird von der Durchführung eines Vergleichs zwischen der erforderlichen mechanischen Leistung (19) und einem vordefinierten Leistungsschwellenwert (12), wobei das Abschalten des Motors (4) bei Überdrehzahl durch die Schutzvorrichtung (8) befohlen wird unter der Bedingung, dass die benötigte mechanische Leistung (19) als kleiner oder gleich dem vordefinierten Leistungsschwellenwert (22) erfasst wird,
**dadurch gekennzeichnet, dass** das Verfahren folgende Schritte aufweist:
- ) je nach dem aktuellen Flugzustand des Drehflügelflugzeugs (1) durch Berechnung Herleiten der von dem Drehflügelflugzeug (1) benötigten mechanischen Leistung durch Erfassung mindestens eines Gegendrehmoments (15), das von mindestens einem der besagten Leistungsbauteile (2) erzeugt wird, von denen mindestens eines der mindestens eine Hauptrotor (5) ist,
- ) Vergleichen der vorher hergeleiteten erforderlichen mechanischen Leistung (19) mit dem Leistungsschwellenwert (22) und Erzeugen eines Sollwerts (12), der die benötigte mechanische Leistung (19) relativ zu dem Leistungsschwellenwert (22) kennzeichnet,
- ) Erfassen der Drehgeschwindigkeit des Motors (4), und im Falle einer Überdrehzahl des Motors (4), Bewirken eines Abschaltens des Motors (4) durch die Schutzvorrichtung (8) gemäß dem zuvor erzeugten Sollwert (12).

2. Verfahren nach Anspruch 1,
**dadurch gekennzeichnet, dass** die benötigte mechanische Leistung (19) aus einem aktuellen Wert des mindestens einen Gegendrehmoments (15) hergeleitet wird.

3. Verfahren nach Anspruch 1,
**dadurch gekennzeichnet, dass** die benötigte mechanische Leistung (19) aus einem erwarteten Wert des mindestens einen Gegendrehmoments (15) hergeleitet wird, der berechnet wird ausgehend von Flugsteuerbefehlen (16), die von einem Piloten des Drehflügelflugzeugs (1) erzeugt werden, durch die die Verstellwinkel der Rotorblätter des mindestens einen Rotors (5, 6) verändert werden.

4. Verfahren nach einem der Ansprüche 1 bis 3,
**dadurch gekennzeichnet, dass**, wenn die benötigte mechanische Leistung (19) durch den Sollwert (12) als größer oder gleich dem Leistungsschwellenwert (22) angegeben wird, durch die Schutzvorrichtung (8) ein Abschalten des Motors (4) bei Überdrehzahl, gesteuert durch die Erfassungsmittel (9), verboten wird.

5. Verfahren nach Anspruch 4,
**dadurch gekennzeichnet, dass** eine Erzeugung des Sollwerts (12) zu einem Bruch der Kontinuität eines logischen Übertragungspfads (27) zu den Regelungsmitteln (7) des Motors (4) führt, eine Erzeugung eines Abschaltbefehls (11') für den Motor (4), der durch die Erfassungsmittel (9) erzeugt wird, eine Überdrehzahl des Motors (4) angibt.

6. Verfahren nach Anspruch 5,
**dadurch gekennzeichnet, dass** die Erzeugung des Sollwerts (12) eine Betätigung (28) eines Umschalters (25) bewirkt, der auf dem logischen Pfad (27) platziert ist, wobei die Betätigung (28) des Umschalters (25) die Übertragung des Abschaltbefehls (11') für den Motor (4) über den logischen Pfad (27) verbietet.

7. Verfahren nach einem der Ansprüche 1 bis 3,
**dadurch gekennzeichnet, dass**, wenn die benötigte mechanische Leistung (19) von dem Sollwert (12) als kleiner oder gleich dem Leistungsschwellenwert (22) angegeben wird, durch die Schutzvorrichtung (8) ein Abschalten des Motors (4) bei Überdrehzahl, gesteuert durch die Erfassungsmittel (9), erlaubt wird.

8. Verfahren nach Anspruch 7,
**dadurch gekennzeichnet, dass** der Sollwert (12) und ein Abschaltbefehl (11') für den Motor (4), erzeugt durch die Erfassungsmittel (9), welche eine Überdrehzahl des Motors (4) erkennen, gemeinsam verarbeitet werden durch eine Berechnung, um einen Befehl (29) zum Abschalten des Motors (4) an die Regelungsmittel (7) des Motors (4) zu erzeugen.

9. Schutzsvorrichtung (8), welche ein Verfahren nach einem der Ansprüche 1 bis 8 ausführen kann, wobei die Schutzvorrichtung (8) Mittel (9) zur Erfassung der Drehgeschwindigkeit des Motors (4) und Mittel (11') zum Erzeugen eines Abschaltbefehls (11') für den Motor (4) bei der Erfassung durch die Erfassungsmittel (9) einer Situation, in der sich der Motor in Überdrehzahl befindet, aufweist, wobei der Betrieb der Schutzvorrichtung (8) von Mitteln zur Bestimmung einer spezifischen Flugphase des Drehflügelflugzeugs abhängig gemacht wird, die ein Abschalten des Motors (4) durch die Schutzvorrichtung (8) im Falle der Erfassung einer Überdrehzahl des Motors (4) erfordert,
**dadurch gekennzeichnet, dass** die Schutzvorrichtung (8) ausgerüstet ist mit:
- ) Rechenmitteln (10) mit mindestens einem ersten Rechner (17) und einem zweiten Rechner (20), wobei der erste Rechner (17) Mittel (18) zum Herleiten der von dem Drehflügelflugzeug (1) geforderten mechanischen Leistung durch Berechnung aufweist, die in Beziehung mit dem zweiten Rechner (20) stehen, wobei der zweite Rechner (20) Mittel (21) zum Vergleichen durch Berechnung der erforderlichen mechanischen Leistung (19), die von dem ersten Rechner (17) übertragen wird, mit dem Leistungsschwellenwert (22) aufweist, wobei der zweite Rechner (20) Mittel (23) zum Erzeugen des Sollwerts (12) aufweist,
- ) Mitteln (31) zum Erzeugen eines Befehls (29) des Abschaltens des Motors (4) durch die Schutzvorrichtung (8), deren Betrieb unter die Abhängigkeit der Erfassungsmittel (9) und der Rechenmittel (10) gestellt ist.

10. Schutzvorrichtung nach Anspruch 9,
**dadurch gekennzeichnet, dass** der erste Rechner (17) ein Werkzeug zur Berechnung der erforderlichen mechanischen Leistung (19) in Abhängigkeit von einer Größe (17) des Flugzustands des Drehflügelflugzeugs ist, die durch Bordinstrumente (13) des Drehflügelflugzeugs geliefert wird und die sich mindestens auf ein Gegendrehmoment (15) bezieht, das mindestens von dem mindestens einen Hauptrotor (5) erzeugt wird.

11. Schutzvorrichtung nach einem der Ansprüche 9 und 10,
**dadurch gekennzeichnet, dass** der erste Rechner (17) ein Werkzeug zur Berechnung der erforderlichen mechanischen Leistung (19) ist, welches eine Vorhersage der erforderlichen mechanischen Leistung (19) in Abhängigkeit von vorhergesagten Flugzustandsgrößen (17) des Drehflügelflugzeugs berücksichtigt, die sich mindestens auf Flugsteuerungsbefehle (16) beziehen, die durch den Piloten des Drehflügelflugzeugs erzeugt werden.

12. Schutzvorrichtung nach einem der Ansprüche 9 bis 11,
**dadurch gekennzeichnet, dass** die Mittel (31) zur Erzeugung des Abschaltbefehls (29) Mittel (24) aufweisen zum Verbieten einer Übertragung eines Befehls (11') zum Abschalten des Motors (4), der durch die Erfassungsmittel (9) erzeugt wird, wobei der Betrieb der Verbietungsmittel (24) unter die Abhängigkeit von Rechenmitteln (10) gestellt wird.

13. Schutzvorrichtung nach Anspruch 12,
**dadurch gekennzeichnet, dass** die Verbietungsmittel (24) auf dem logischen Pfad (27) zur Übertragung des Abschaltbefehls (11') für den Motor (4), der durch die Erfassungsmittel (9) erzeugt wird, angeordnet sind.

14. Schutzvorrichtung nach Anspruch 13,
**dadurch gekennzeichnet, dass** die Verbietungsmittel (24) einen Umschalter (25) mit einem Relais (26) aufweisen, dessen Betätigung (28) unter die Abhängigkeit einer Erzeugung eines Sollwerts (12) durch die Rechenmittel (10) gestellt ist.

15. Schutzvorrichtung nach einem der Ansprüche 9 bis 11,
**dadurch gekennzeichnet, dass** die Mittel (31) zur Erzeugung eines Befehls (29) zum Abschalten des Motors (4) einen dritten Rechner (30) aufweisen zur gemeinsamen Verarbeitung durch Berechnung des Sollwerts (12) und eines Befehls (11') zum Abschalten des Motors (4), der durch die Erfassungsmittel (9) erzeugt wird.

16. Drehflügelflugzeug (1) mit einer Schutzvorrichtung (8) nach einem der Ansprüche 9 bis 15.

## Claims

1. Method of stopping an engine (4) in overspeed with which a rotorcraft (1) is equipped, the rotorcraft (1) being provided with at least one said engine (4) for driving power members (2) of the rotorcraft (1) including at least one rotor (5,6) comprising at least one main rotor (5) having a substantially vertical axis, the method comprising an operation of detecting an overspeed of said engine (4) and an operation of detecting at least one specific phase of flight of the rotorcraft (1) conditioning the implementation of a protection device (8) causing a stopping of the engine (4) in the event of detection of an overspeed of the engine (4), said specific phase of flight being identified by a mechanical power required (19) by the rotorcraft (1) which has to be delivered by said at least one engine (4), a stopping of the engine (4) in overspeed by the protection device (8) being placed under the dependence of an operation of comparison between said mechanical power required (19) and a predefined power threshold (22), the stopping of the engine (4) in overspeed being controlled by the protection device (8) on condition that said mechanical power required (19) is identified as being less than or equal to the predefined power threshold (22),
**characterised in that** the method comprises the following operations:
- ) according to the current state of flight of the rotorcraft (1), deducing by calculation the mechanical power required (19) by the rotorcraft (1) by identifying at least one resisting torque (15) generated by at least one of said power members (2) including at least said at least one main rotor (5),
- ) comparing the previously deduced mechanical power required (19) with said power threshold (22) and generating a setpoint (12) identifying the mechanical power required (19) relative to said power threshold (22),
- ) detecting the speed of rotation of the engine (4) and in the event of overspeed of the engine (4) conditioning a stopping of the engine (4) by the protection device (8) according to the previously generated setpoint (12).

2. Method according to claim 1,
**characterised in that** the mechanical power required (19) is deduced from a current value of said at least one resisting torque (15).

3. Method according to claim 1,
**characterised in that** the mechanical power required (19) is deduced from an anticipated value of said at least one resisting torque (15) calculated from flight commands (16) generated by a pilot of the rotorcraft (1) modifying the pitch of the blades of said at least one rotor (5,6).

4. Method according to any one of claims 1 to 3,
**characterised in that** the mechanical power required (19) being identified by said setpoint (12) as being greater than or equal to said power threshold (22), preventing by the protection device (8) a stopping of the engine (4) in overspeed controlled by the detecting means (9).

5. Method according to claim 4,
**characterised in that** a generation of the setpoint (12) causes a break in the continuity of a logic path (27) for transmitting to a regulating means (7) of the engine (4) a stop order (11') of the engine (4) generated by detecting means (9) identifying a situation of the engine (4) in overspeed.

6. Method according to claim 5,
**characterised in that** a generation of the setpoint (12) causes an actuation (28) of a switch (25) placed on said logic path (27), said actuation (28) of the switch (25) preventing the transmission over the logic path (27) of said stop order (11') for stopping the engine (4).

7. Method according to any one of claims 1 to 3,
**characterised in that** the mechanical power required (19) being identified by said setpoint (12) as being less than or equal to said power threshold (22), authorising by the protection device (8) a stopping of the engine (4) in overspeed controlled by detecting means (9).

8. Method according to claim 7,
**characterised in that** the setpoint (12) and a stop order (11') for stopping the engine (4) generated by detecting means (9) identifying a situation of the engine (4) in overspeed, are processed jointly by calculation to generate a stop command (29) for stopping the engine (4) to a regulating means (7) of the engine (4).

9. Protection device (8) suitable for the implementation of a method according to any one of claims 1 to 8, said protection device (8) comprising detecting means (9) for detecting the speed of rotation of the engine (4) and generating means for generating a stop order (11') for stopping the engine (4) in the event of an identification by the detecting means (9) of a situation of the engine in overspeed, the operation of the protection device (8) being placed under the dependence of means for determining a specific phase of flight of the rotorcraft (1) conditioning a stopping of the engine (4) by the protection device (8) in the event of a said identification of the engine (4) in overspeed,
**characterised in that** the protection device (8) is equipped with:
- ) calculation means (10) comprising at least a first calculator (17) and a second calculator (20), the first calculator (17) comprising means for deducing (18) by calculation the mechanical power required (19) by the rotorcraft (1) and being in communication with the second calculator (20), the second calculator (20) comprising means for comparison (21) by calculation between the mechanical power required (19) transmitted by the first calculator (17) and the power threshold (22), the second calculator (20) comprising means generating (23) the setpoint (12),
- ) means for generating (31) a stop command (29) of the engine (4) by the protection device (8), the implementation of which is placed under the dependence of said detecting means (9) and said calculation means (10).

10. Protection device according to claim 9,
**characterised in that** the first calculator (17) is a tool for calculating the mechanical power required (19) as a function of flight state data (17) of the rotorcraft supplied by on-board instrumentation (13) of the rotorcraft and relating at least to the resisting torque (15) generated at least by said at least one main rotor (5).

11. Protection device according to any one of claims 9 and 10,
**characterised in that** the first calculator (17) is a tool for calculating the mechanical power required (19) taking into account an anticipation of the mechanical power required (19) as a function of anticipated flight state data (17) of the rotorcraft relating at least to flight commands (16) generated by a pilot of the rotorcraft.

12. Protection device according to any one of claims 9 to 11,
**characterised in that** the means for generating (31) the stop command (29) comprise prevention means (24) for preventing a transmission of a stop order (11') for stopping the engine (4) generated by the detecting means (9), the implementation of the prevention means (24) being placed under the dependence of the calculation means (10).

13. Protection device according to claim 12,
**characterised in that** the prevention means (24) are placed on a logic path (27) for transmitting the stop order (11') for stopping the engine (4) generated by the detecting means (9).

14. Protection device according to claim 13,
**characterised in that** the prevention means (24) comprise a switch (25) having a relay (26), the operation (28) of which is placed under the dependence of a generation of the setpoint (12) by the calculation means (10).

15. Protection device according to any one of claims 9 to 11,
**characterised in that** the means for generating (31) a stop command (29) for stopping the engine (4) comprise a third calculator (30) for jointly processing by calculation the setpoint (12) and a stop order (11') for stopping the engine (4) generated by the detecting means (9).

16. Rotorcraft (1) equipped with a protection device (8) according to any one of claims 9 to 15.
